# EUROPEAN PATENT SPECIFICATION

(11) **EP 3 828 599 B1**
(45) Date of publication and mention of the grant of the patent: **07.06.2023**
(21) Application number: 19842854.2
(22) Date of filing: 25.11.2019
(51) Int. Cl.: G02B 1/11, G02B 5/00

(54) **REFLECTION PREVENTING STRUCTURE**
ANTIREFLEKTIERENDER STRUKTURELLER KÖRPER
STRUCTURE DE PRÉVENTION DE RÉFLEXION

(30) Priority: 18.10.2019 JP 2019191252
(43) Date of publication of application: 02.06.2021
(73) Proprietor: Otsuka Techno Corporation, Naruto-shi, Tokushima 771-0360 (JP)
(72) Inventor: SATO, Hideaki, Naruto-shi Tokushima 7710360 (JP); KAMIKADO, Yosuke, Naruto-shi Tokushima 7710360 (JP); OKADA, Yasuyuki, Naruto-shi Tokushima 7710360 (JP); HANAOKA, Shingo, Naruto-shi Tokushima 7710360 (JP); TAKAHASHI, Yukio, Naruto-shi Tokushima 7710360 (JP); MORIMOTO, Shunsuke, Naruto-shi Tokushima 7710360 (JP)
(74) Representative: Hoffmann Eitle
(86) International application number: PCT/JP2019/046032
(87) International publication number: WO 2021/075066

(56) References cited:
- WO-A1-2014/038288
- WO-A1-2014/038288
- WO-A1-2018/062481
- WO-A1-2018/062481
- WO-A1-2018/092353
- JP-A- 2008 096 820
- JP-A- 2010 117 707
- JP-A- 2010 534 342

## Description

### Technical Field

The present invention relates to an anti-reflective structural body.

### Background Art

As conventional examples of an anti-reflective structural body that suppresses reflection of light, the structural bodies described in Patent Literatures 1 and 2 have been proposed.

Patent Literature 1 discloses an anti-reflective structure portion that includes a base structure portion arranged by an alignment of a plurality of structural units each disposed on a reference surface and having a first side surface with which an angle α formed with the reference surface is a predetermined angle, and a plurality of finely uneven portions formed on a surface of the basic structure portion and arrayed regularly at a period of not more than a predetermined wavelength.

Patent Literature 2 discloses an anti-reflective film constituted of a substrate layer constituted, at least at one surface side, of an optically transparent material exhibiting an anti-reflective characteristic in relation to a wavelength of radiation that is incident on the surface. Citation List

### Patent Literature

Patent Literature 1: Japanese Patent No. 5512269 Patent Literature 2: Japanese Translation of International Application (Kohyo) No. 2001-517319. WO 2018/062481 discloses an absorption type antireflective material that can sufficiently suppress reflection of light. WO 2014/038288 discloses a moth-eye film wherein dew condensation is not easily generated on the surface thereof. These documents disclose forming an uneven structure into a transparent substance.

### Summary of Invention

### Technical Problem

Designs of industrial products have been diversifying in recent years and an external appearance design can influence sales of a product. Diverse textures are thus required of materials that are visible from the exterior in addition to materials constituting the body of a product. For example, even when the external appearance is simply black, there may be cases where a deeper blackness is demanded.

Also, with the diversification of design, there are cases where it is difficult to apply an anti-reflective processing to inner and outer surfaces of a product itself. In this case, an anti-reflective function can be imparted to the outer surface of the product by attaching an anti-reflective structure film to the inner and outer surfaces of the product.

Thus, an object of the present invention is to provide an anti-reflective structural body capable of expressing an excellent anti-reflective function.

### Solution to Problem

An anti-reflective structural body according to one aspect of the present invention includes a main body constituted of a raw material that contains a color material of black color and an anti-reflective structure formed on an outer surface of the main body, the anti-reflective structure includes a plurality of recesses each being formed to be recessed with respect to the outer surface and a base portion forming boundary portions of the recesses that are mutually adjacent and having a top portion on the outer surface, a profile curve of the base portion in a depth direction of the recesses includes the top portion formed to a curved shape, and virtual circles respectively including portions of the top portion of the curved shape as circular arcs each have a diameter φ of not more than 50 um.

### Advantageous Effects of Invention

By the anti-reflective structural body according to the one aspect of the present invention, an excellent anti-reflective function can be expressed because the diameter of the virtual circles of the top portion of the base portion of the anti-reflective structural is not more than 50 um.

### Brief Description of Drawings

[FIG. 1] FIG. 1 is a schematic perspective view of an anti-reflective structure film according to a preferred embodiment of the present invention.
[FIG. 2] FIG. 2 is an enlarged view of principal portions of the anti-reflective structure of FIG. 1.
[FIG. 3] FIG. 3 is a sectional view appearing when the anti-reflective structure is sectioned along line III-III of FIG. 2.
[FIG. 4] FIG. 4 is a diagram showing a profile curve of a base portion.
[FIG. 5] FIG. 5 is a diagram for describing a manufacturing process of the anti-reflective structure film.
[FIG. 6] FIG. 6 is an enlarged sectional view of a pair of pinch rolls.
[FIG. 7] FIG. 7 is a diagram showing a modification example of the anti-reflective structure.
[FIG. 8] FIG. 8 is a diagram showing a modification unclaimed example of the anti-reflective structure.
[FIG. 9] FIG. 9 is a diagram showing a modification example of the anti-reflective structure.
[FIG. 10] FIG. 10 is a diagram showing a modification example of the manufacturing process of the anti-reflective structure film.
[FIG. 11] FIG. 11 is a diagram showing a modification example of the manufacturing process of the anti-reflective structure film.
[FIG. 12] FIG. 12 is a general arrangement diagram as viewed from above of an anti-reflective structure molded article (lens barrel) according to a preferred embodiment of the present invention.
[FIG. 13] FIG. 13 is a general arrangement diagram as viewed from below of the anti-reflective structure molded article (lens barrel) according to the preferred embodiment of the present invention.
[FIG. 14] FIG. 14A and FIG. 14B are diagrams showing, in the order of process, a method for manufacturing the anti-reflective structure molded article shown in FIG. 12 and FIG. 13.
[FIG. 15] FIG. 15 is a general arrangement diagram of a device used to measure reflectances of examples.
[FIG. 16] FIG. 16 is a diagram showing reflectance measurement results of the examples.
[FIG. 17] FIG. 17 is a diagram showing reflectance measurement results of the examples.
[FIG. 18] FIG. 18 is a diagram showing reflectance measurement results of the examples.
[FIG. 19] FIG. 19 is a diagram for describing a relationship of a depth D of each recess and a pitch P between the recesses.
[FIG. 20] FIG. 20 is a diagram showing reflectance measurement results of the examples.
[FIG. 21] FIG. 21 is a diagram showing reflectance measurement results of the examples.
[FIG. 22] FIG. 22 is a diagram showing reflectance measurement results of the examples.

### Description of Embodiments

### <Preferred Embodiments of the Invention>

First, preferred embodiments of the present invention shall be listed and described.

An anti-reflective structural body according to a preferred embodiment of the present invention includes a main body constituted of a raw material that contains a color material of black color and an anti-reflective structure formed on an outer surface of the main body, the anti-reflective structure includes a plurality of recesses each being formed to be recessed with respect to the outer surface and a base portion forming boundary portions of the recesses that are mutually adjacent and having a top portion on the outer surface, a profile curve of the base portion in a depth direction of the recesses includes the top portion formed to a curved shape, and virtual circles respectively including portions of the top portion of the curved shape as circular arcs each have a diameter φ of not more than 50 um.

With the anti-reflective structural body according to the preferred embodiment of the present invention, the diameter φ of the virtual circles may be 1.0 um to 50 µm.

With the anti-reflective structural body according to the preferred embodiment of the present invention, the main body may be formed to a layer shape having a first surface that includes the outer surface and a second surface at a side opposite the first surface.

With the anti-reflective structural body according to the preferred embodiment of the present invention, a depth D of each of the recesses may be of a magnitude less than 1/2 of a thickness T of the main body of the layer shape.

With the anti-reflective structural body according to the preferred embodiment of the present invention, the thickness T of the main body of the layer shape may be 0.01 mm to 5 mm and the depth D of each of the recesses may be 0.005 mm to 2.5 mm.

With the anti-reflective structural body according to the preferred embodiment of the present invention, each of the recesses may have, in a sectional view in a depth direction of the recesses, a pair of inclined surfaces that intersect each other and an angle θ between the pair of inclined surfaces may be not more than 90°.

With the anti-reflective structural body according to the preferred embodiment of the present invention, the angle θ between the pair of inclined surfaces may be 5° to 90°.

### <Detailed Description of the Preferred Embodiments of the Present Invention>

Preferred embodiments of the present invention shall now be described in detail with reference to the attached drawings.

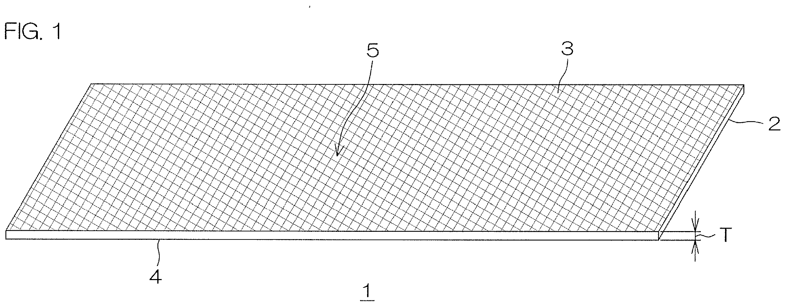

FIG. 1 is a schematic perspective view of an anti-reflective structure film 1 according to a preferred embodiment of the present invention.

The anti-reflective structure film 1 as one example of an anti-reflective structural body of the present invention includes a film main body 2 having a first surface 3 and a second surface 4 at a side opposite the first surface 3 and an anti-reflective structure 5 formed on the first surface 3 of the film main body 2.

The film main body 2 is formed, for example, to a rectangular shape. The anti-reflective structure film 1 does not have to be of rectangular shape as long as it is of film shape having flexibility. For example, the anti-reflective structure film 1 may be of square shape or of circular shape. Also, a thickness T of the film main body 2 may, for example, be 0.01 mm to 5 mm. Also, as long as it is formed to a layer shape, the film main body 2 may be defined by another name (for example, a sheet main body). For example, it may be called a film main body if the thickness T is not more than 0.25 mm and may be called a sheet main body if the thickness T exceeds 0.25 mm.

A base raw material of the film main body 2 is not restricted in particular and a natural rubber, synthetic rubber, (synthetic) resin, etc., can be cited as examples, and preferably a synthetic resin is used. As the synthetic resin, a thermoplastic resin, for example, a styrene resin, PP resin, PE resin, PVC resin, PET resin, PTFE resin, PEEK resin, PPS resin, COP resin, LCP resin, silicone resin, polyurethane resin, acrylic resin, polyamide resin, polycarbonate resin, etc., can be cited. More preferably among these, a polycarbonate resin is used. The base raw materials mentioned above may each be used alone or may be used in combination.

That is, the film main body 2 may be film with which a mixture of a plurality of the base materials are molded in a single layer or may be a plural layer film with which a plurality of the base materials are molded as separate layers and the plurality of layers are layered. In the latter case, one of the layers may be a substrate film (substrate layer) at the second surface 4 side that has a comparatively large thickness and imparts strength to the film main body 2 and a remaining layer layered on the substrate film may be a functional layer at the first surface 3 side on which the anti-reflective structure 5 is formed and by which an anti-reflective function is imparted to the film main body 2.

Also, the base raw material of the film main body 2 contains a color material of black color to impart a black color to the film main body. The color material of black color is not restricted in particular and carbon black, graphite, titanium black, etc., can be cited as examples. Also, an example of a content ratio of the color material of black color with respect to the base raw material is 0.1 to 15 parts by mass of carbon black with respect to 100 parts by mass of polycarbonate resin. The content ratio of the color material of black color should be changed as appropriate in accordance with intended use of the film main body 2.

Also, the base raw material of the film main body 2 may contain a filler, such as glass fibers, carbon fibers, microfibers, carbon nanotubes, cellulose nanofibers, etc., as necessary.

The first surface 3 of the film main body 2 is a surface of the anti-reflective structure film 1 on which the anti-reflective structure 5 is formed. The first surface 3 of the film main body 2 may be called a front surface of the film main body 2 because it is a front surface side when the anti-reflective structure film 1 is attached to an attachment object structure (not shown).

On the other hand, the second surface 4 of the film main body 2 is a smooth surface of the anti-reflective structure film 1 on which the anti-reflective structure 5 is not formed. The second surface 4 of the film main body 2 may be called a rear surface of the film main body 2 because it is a to-be-attached surface of the anti-reflective structure film 1 with respect to the attachment object structure (not shown) . Also, an adhesive layer (not shown) for adhesion to the attachment object structure may be formed on the second surface 4 of the film main body 2.

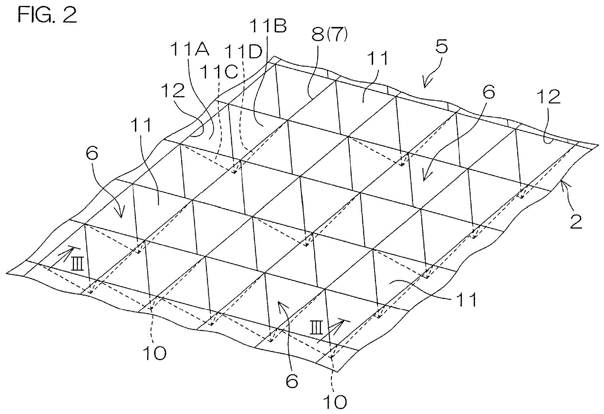

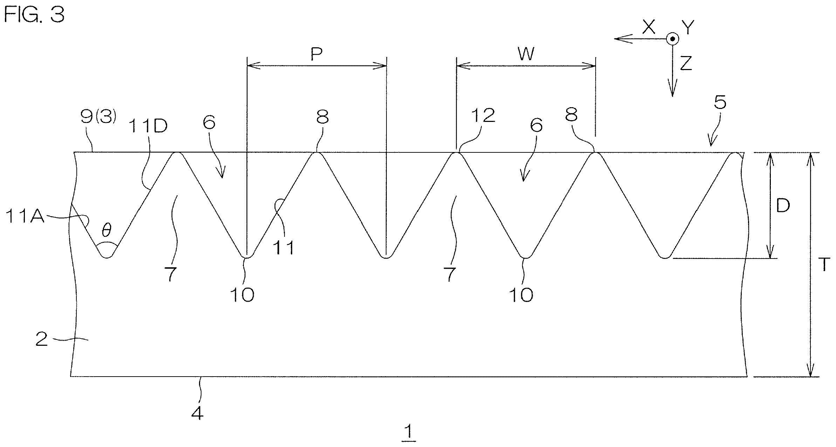

FIG. 2 is an enlarged view of principal portions of the anti-reflective structure 5 of FIG. 1. FIG. 3 is a sectional view appearing when the anti-reflective structure 5 is sectioned along line III-III of FIG. 2. In FIG. 2, for the sake of clarity, inclined surfaces 11 and tip portions 10 of recesses 6 that are visible in transparent view are shown just for a portion of the recesses 6.

Referring to FIG. 2 and FIG. 3, the anti-reflective structure 5 includes a plurality of the recesses 6 and a base portion 7 that forms boundary portions of mutually adjacent recesses 6 and surrounds the respective recesses 6.

Each recess 6 is formed to be recessed toward a thickness direction interior of the film main body 2 from a base surface 9 set at a height position of a top portion 8 of the base portion 7. That is, each recess 6 is a recess constituted of a conical hollow space having inclined surfaces 11 spreading toward the base surface 9 with the tip portion 10, which is a punctiform apex portion disposed in an interior of the film main body 2, as a center. Also, by the base portion 7, each recess 6 is disposed to be independent of the recesses 6 that are mutually adjacent.

Each recess 6 has an opening portion 12 of quadrilateral shape (square shape). The recess 6 constitutes a quadrilateral conical recess having a first inclined surface 11A, a second inclined surface 11B, a third inclined surface 11C, and a fourth inclined surface 11D that are inclined toward the tip portion 10 from respective sides of the opening portion 12 and join into one at the tip portion 10. Therefore, as shown in FIG. 3, the recess 6 has a pair of mutually intersecting inclined surfaces 11 in a cross section in a thickness direction of the film main body 2. Here, in FIG. 3, the inclined surface 11A and the inclined surface 11D that face each other are shown. Also, in FIG. 2 and FIG. 3, the first inclined surface 11A, the second inclined surface 11B, the third inclined surface 11C, and the fourth inclined surface 11D are shown in just one recess 6 for the sake of clarity.

Referring to FIG. 3, in each recess 6, an angle θ between inclined surfaces 11 that face each other, for example, may be not more than 90°, preferably be 5° to 90°, and even more preferably be 5° to 60°.

Also, a depth D (distance from the base surface 9 to the tip portion 10) of each recess 6 is preferably of a magnitude not more than 1/2 of the thickness T of the film main body 2 and may, for example, be 0.005 mm to 2.5 mm. By setting such that D≤1/2T, comparatively thick portions in which hollow portions, such as the recesses 6, are not formed can be secured in the film main body 2 and the film main body 2 can thus be imparted with an appropriate strength.

Also, a pitch P between mutually adjacent recesses 6 (mutual distance between the tip portions 10) may be 0.01 mm to 1 mm.

In addition, a diameter (width) W of the opening portion 12 of each recess 6 can be determined, for example, by determining the angle θ between the inclined surfaces 11, the depth D of the recesses 6, and the pitch P of the recesses 6. A specific range of the width W of the opening portion 12 may, for example, be 0.01 mm to 1 mm.

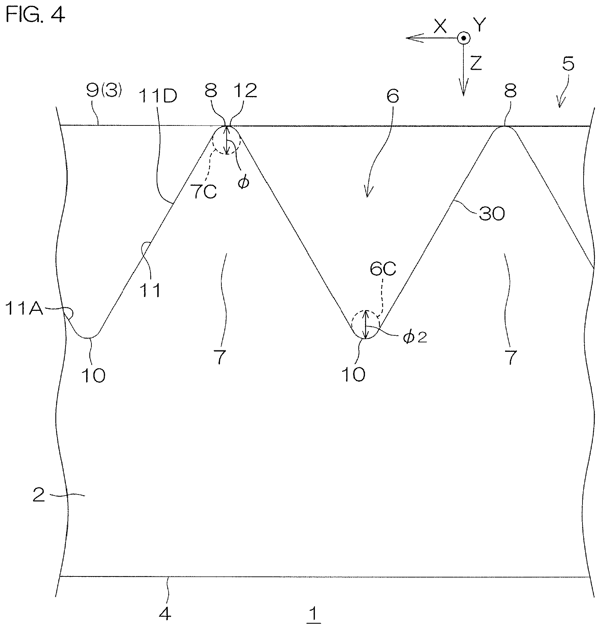

Next, shapes of the tip portions 10 of the recesses 6 and the top portion 8 of the base portion 7 shall now be described with reference to FIG. 4. FIG. 4 is a diagram showing a profile curve 30 of the base portion 7.

The profile curve 30 shown in FIG. 4 expresses a cross-sectional shape of the base portion 7. The profile curve 30 can be prepared, for example, by using a laser microscope, etc. For example, directions oriented along the first surface 3 of the film main body 2 are deemed to be X and Y directions, a depth direction of the recesses 6 that is orthogonal to the X and Y directions is deemed to be a Z direction, and a laser mechanism of a laser microscope is scanned two-dimensionally in each of the X and Y directions. Laser light reflected from each inclined surface 11 is thereby made incident on a light receiving element of the laser microscope. The profile curve 30 (cross-sectional shape) of the base portion 7 is then obtained based on a light amount of the reflected light, a height of a lens of the laser microscope, etc.

As shown in FIG. 4, the tip portion 10 of each recess 6 is formed to a curved shape (arcuate shape) in the cross section in the thickness direction of the film main body 2. Here, a virtual circle 6C that includes a portion of the tip portion 10 of the curved shape as a circular arc has a diameter φ2, for example, of not more than 50 um. The diameter φ2 may preferably be 1.0 um to 50 um and more preferably be 1.0 um to 20 um.

In the present preferred embodiment, the base portion 7 is formed to a lattice as shown in FIG. 2 and one each of the recesses 6 is formed in each lattice window portion. The plurality of recesses 6 are thereby arrayed in a lattice pattern. The top portion 8 of the base portion 7 is thus formed as a ridgeline portion of mutually adjacent recesses 6.

Also, as shown in FIG. 4, the top portion 8 of the base portion 7 is formed to a curved shape (arcuate shape) in the cross section in the thickness direction of the film main body 2. Here, a virtual circle 7C that includes a portion of the top portion 8 of the curved shape as a circular arc has a diameter φ, for example, of not more than 50 um. The diameter φ may preferably be 1.0 um to 50 um and more preferably be 1.0 um to 20 um.

Also, in the anti-reflective structure 5, the base surface 9 (top portion 8) and the inclined surfaces 11 of the recesses 6 are finished to a state where the raw material of the film main body 2 is exposed. That is, the base surface 9 and the inclined surfaces 11 of the recesses 6 are not covered with a thin film, etc., that is constituted of a raw material differing from the raw material of the film main body 2 and also, the recesses 6 are not refilled with another resin material, etc., but are maintained in a hollow state.

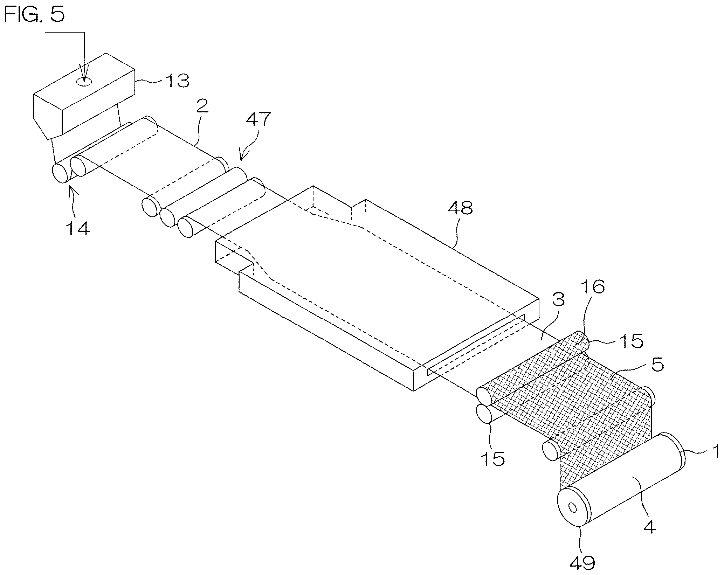

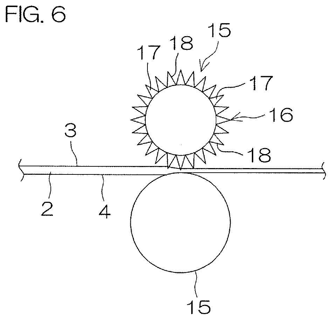

FIG. 5 is a diagram for describing a manufacturing process of the anti-reflective structure film 1. FIG. 6 is an enlarged sectional view of a pair of pinch rolls 15.

To manufacture the anti-reflective structure film 1, for example, the base raw materials mentioned above and additives (for example, color material, filler, etc.) that are added as necessary are loaded into an extruder (not shown) and extrusion-molded from the extruder. The film main body 2 is thereby molded. In the extrusion molding process, the base raw materials should be made into a film, for example, by extruding the raw materials from a T die 13 included in the extruder. Also, if the film main body 2 is to be of plural layers, the film main body 2 that includes plural layers may be formed by coextrusion of a plurality of raw materials. The extruded film main body 2 is solidified by cooling rolls 14.

Next, by passing through a longitudinal stretching machine 47, the film main body 2 is stretched in a longitudinal axis direction (direction of advance of the film main body 2) and thereafter, by passing through a lateral stretching machine 48, the film main body 2 that has been stretched in the longitudinal axis direction is further stretched in a lateral axis direction (direction orthogonal to the direction of advance). The film main body 2 (biaxially stretched film) that has been stretched along the two axis of the longitudinal axis direction and the lateral axis direction is thereby obtained.

The next step is a transfer step of forming the anti-reflective structure 5 on the film main body 2. In the transfer step, the biaxially stretched film main body 2 is, for example, sandwiched between a pair of upper and lower pinch rolls 15.

As shown in FIG. 6, a transfer pattern 16 is provided on one of the pair of pinch rolls 15.

Projections 17 corresponding to the recesses 6 of the anti-reflective structure 5 and a recess 18 of lattice shape that surrounds the projections 17 and corresponding to the base portion 7 of the anti-reflective structure 5 are formed in the transfer pattern 16. That is, the transfer pattern 16 is formed in an opposite pattern to that of the anti-reflective structure 5. Therefore, tip portions (not shown) of the projections 17 are formed to arcuate shapes having the same diameter as the diameter φ2 of the virtual circles 6C of the tip portions 10, and apex portions (not shown) of the recess 18 are formed to arcuate shapes having the same diameter as the diameter φ of the virtual circles 7C of the top portion 8. Such a transfer pattern 16 can be formed, for example, by precise processing of a surface of the pinch roll 15 with a diamond cutting tool, etc. The transfer pattern 16 can also be formed by applying plating, laser processing, etc., to the surface of the pinch roll 15.

The first surface 3 of the film main body 2 is then embossed by the transfer pattern 16 being transferred onto the first surface 3 of the film main body 2 when the film main body 2 passes between the pair of pinch rolls 15. The anti-reflective structure 5 is thereby formed on the first surface 3 of the film main body 2. The anti-reflective structure film 1 is thereafter obtained by the film main body 2 being wound up by a winding roll 49.

Although in FIG. 5, the transfer step is provided in the middle of the series of steps of extruding to winding up of the film main body 2, the transfer step may instead be of another method. For example, a press plate having the same pattern as the transfer pattern 16 may be pressed against the first surface 3 of the film main body 2 after extrusion to press transfer the transfer pattern onto the film main body 2.

As described above, with the anti-reflective structure film 1 of the present preferred embodiment, reflection of light incident on the first surface 3 (base surface 9) of the film main body 2 can be suppressed because the diameter φ of the virtual circles 7C of the top portion 8 of the base portion 7 of the anti-reflective structure 5 is not more than 50 um. Consequently, an excellent anti-reflective function can be expressed. Also, the top portion 8 of the base portion 7 of the anti-reflective structure 5 is of lattice shape and not of sharp, independent shapes and therefore, even if some form of contact occurs with the first surface 3 of the film main body 2, breakage of a portion of the top portion 8 can be suppressed. Forming of unwanted particles can thereby be prevented and shape change of the top portion 8 can be prevented, thereby enabling the anti-reflective function of the anti-reflective structure 5 to be maintained.

Also, with the present preferred embodiment, the quadrilateral conical recesses 6 in the anti-reflective structure 5 are arrayed with regularity along a longitudinal direction and a lateral direction that are mutually orthogonal and therefore the reflection of light on the base surface 9 can be suppressed uniformly.

Further, since the anti-reflective structural body is the anti-reflective structure film 1, even in a case where it is difficult to apply an anti-reflective processing to inner and outer surfaces of a product itself (for example, in a case where the inner and outer surfaces of the product are curved surfaces), the anti-reflective function can be imparted to the inner and outer surfaces of the product by attaching the anti-reflective structure film 1 to the inner and outer surfaces.

Although a preferred embodiment of the present invention has been described above, the present invention may be implemented in other modes.

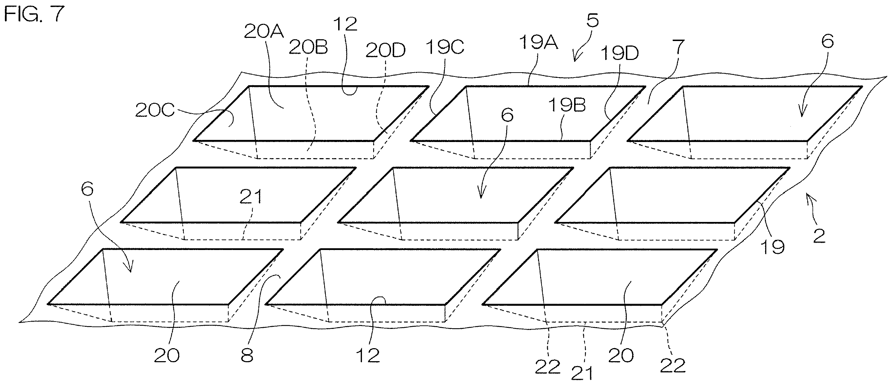

For example, although with the preferred embodiment described above, the opening portion 12 of each recess 6 of the anti-reflective structure 5 is of square shape, it may instead be of rectangular shape as shown in FIG. 7. More specifically, the opening portion 12 has a first side 19A and a second side 19B that face each other and a third side 19C and a fourth side 19D that face each other. With the recess 6, a first inclined surface 20A and a second inclined surface 20B, respectively extending from the first side 19A and the second side 19B, form a linear apex portion 21. On the other hand, a third inclined surface 20C and a fourth inclined surface 20D, respectively extending from the third side 19C and the fourth side 19D, form punctiform apex portions 22 with the first inclined surface 20A and the second inclined surface 20B at respective end portions of the linear apex portion 21.

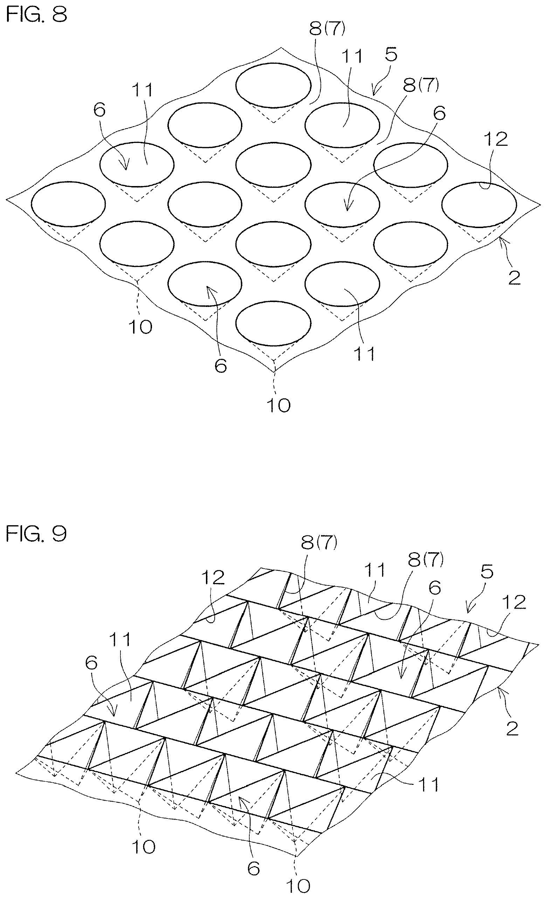

Also, although with the preferred embodiment described above, the recesses 6 are formed as quadrilateral conical recesses 6, the recesses may, for example, be circular conical recesses 6 as shown in FIG. 8 (which is an unclaimed example) or may be triangular conical recesses 6 as shown in FIG. 9. In the case of the triangular conical recesses 6, the top portion 8 can be formed as a ridgeline portion by arraying the plurality of triangular conical recesses 6 in a truss.

Also, although with the preferred embodiment described above, extrusion molding (biaxial stretching) and roll pattern transfer were indicated as an example of a processing process of the anti-reflective structure 5, a processing process besides this, such as UV lamination, embossing, screen printing, injection molding, etc., can be adopted.

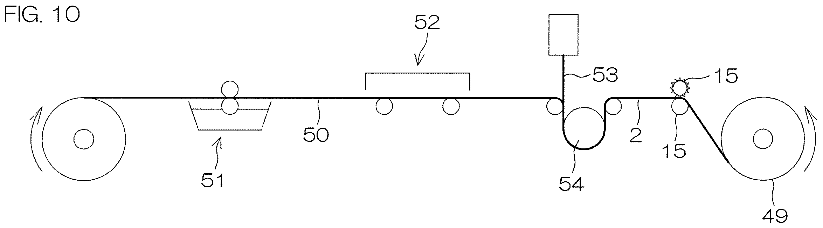

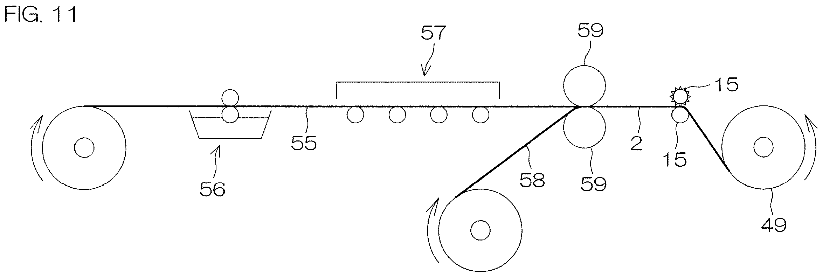

For example, the film main body 2 may be formed by a lamination process of FIG. 10 or FIG. 11 and roll pattern transfer may be performed on the film main body 2.

The process of FIG. 10 is, specifically, an extrusion lamination process. That is, a substrate 50 is coated with an anchor coat (adhesive auxiliary material) in a coating portion 51 and is thereafter fed into a drying portion 52. A separately extruded film-shaped resin 53 in a molten state is layered (laminated) onto the dried substrate 50 and by being solidified by being pressure bonded by a cooling roll 54, the film main body 2 is obtained. The anti-reflective structure 5 is then formed on the film main body 2 by the film main body 2 passing through the pair of pinch rolls 15.

On the other hand, the process of FIG. 11 is, specifically, a dry lamination process. That is, a substrate 55 is coated with an anchor coat (adhesive auxiliary material) in a coating portion 56 and is thereafter fed into a drying portion 57. A separately prepared film 58 is layered (laminated) onto the dried substrate 55 and by performing thermocompression bonding by a pair of steel rolls 59, the film main body 2 is obtained. The anti-reflective structure 5 is then formed on the film main body 2 by the film main body 2 passing through the pair of pinch rolls 15.

The anti-reflective structure film according to the present invention can be used favorably as a film to be attached to an outer surface, for example, of an automotive interior material (instrumental panel, etc.), an automotive exterior material (headlight, tail lamp, etc.), a lens barrel of a camera lens, an anti-reflective structure for an HUD (head-up display), an anti-reflective structure for an optical sensor, a structure for improving a design quality of a watch, or any of other various industrial products.

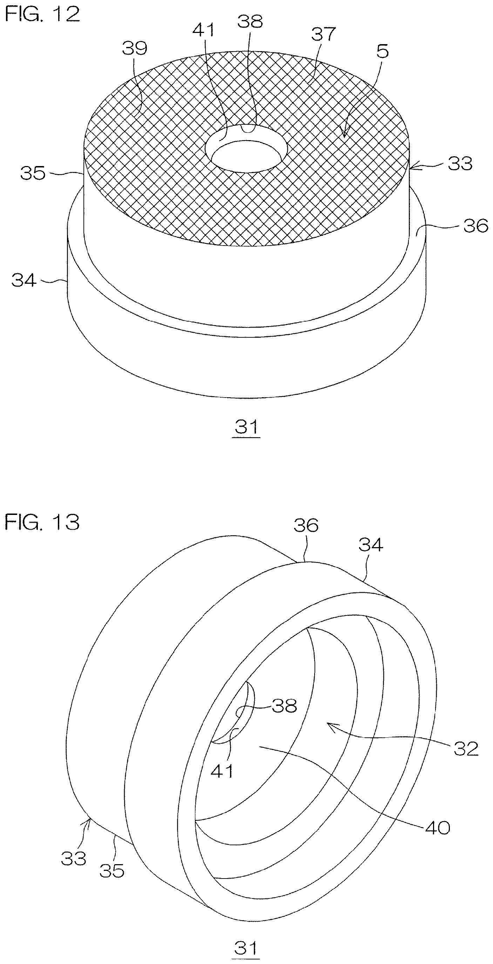

Also, although with the preferred embodiment described above, the arrangement of the anti-reflective structure film was described as an example of a preferred embodiment of the present invention, the present invention is not restricted to a film and can be applied to industrial products of various shapes. For example, a preferred embodiment may be an anti-reflective structure molded body that includes the anti-reflective structure 5 described above. FIG. 12 and FIG. 13 show a lens barrel 31 as an example of an anti-reflective structure molded body.

The lens barrel 31 as an example of an anti-reflective structural body according to the present invention includes, as a main body portion, a cylindrical portion 33 defining a lens housing portion 32 as an example of a hollow internal space for housing a lens (not shown).

The cylindrical portion 33 has a two-stage structure in which a first portion 34 of relatively large diameter and a second portion 35 of smaller diameter than the first portion 34 are coupled and, at a boundary portion of these portions, a step portion 36 is formed over an entire periphery of the cylindrical portion 33. An inner diameter of the first portion 34 may, for example, be 3.0 mm to 5.0 mm, and an inner diameter of the second portion 35 may, for example, be 3.0 mm to 5.0 mm. Also, an axial direction height of the cylindrical portion 33 may, for example, be 0.50 mm to 5.0 mm.

An annular top portion 37 is provided at a second portion 35 side end portion (one end portion) of the cylindrical portion 33. The annular top portion 37 is formed to a circular annular plate shape having an aperture 38, for taking light into the lens housing portion 32, at a central portion. A surface (outer surface 39) of the annular top portion 37 at a side opposite the lens housing portion 32 constitutes a circular region surrounding the aperture 38 and the anti-reflective structure 5 is formed over an entirety of the circular region. On the other hand, a surface (inner surface 40) of the annular top portion 37 at the lens housing portion 32 side is a smooth surface on which the anti-reflective structure 5 is not formed.

The aperture 38 of the annular top portion 37 penetrates through the annular top portion 37 in a thickness direction and is formed to a circular shape having a tapered peripheral surface 41, which, in the thickness direction, widens in diameter toward the side opposite the lens housing portion 32. A diameter (maximum diameter) of the aperture 38 of the annular top portion 37 is, for example, 1.0 mm to 3.0 mm with respect to an outer diameter (for example of 4.0 mm to 7.0 mm) of the annular top portion 37.

Also, a first portion 34 side end portion (other end portion) of the cylindrical portion 33 is opened with an inner diameter dimension of the first portion 34.

The lens barrel 31 is formed of a molded article with which the cylindrical portion 33 and the annular top portion 37 are integral.

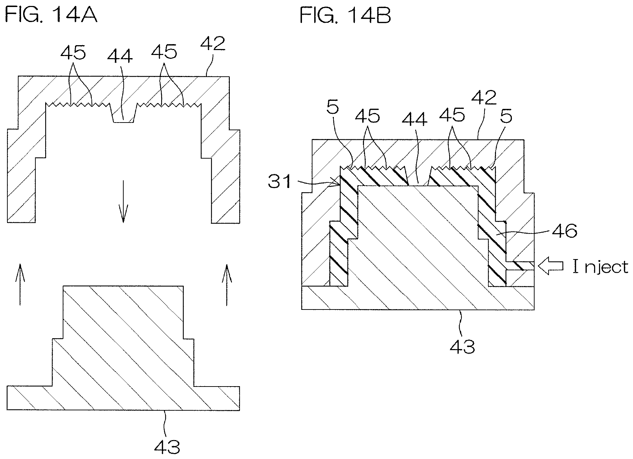

To manufacture the lens barrel 31, molding metal molds (for example, a female mold 42 and a male mold 43) are prepared as shown in FIG. 14A. A projection 44, corresponding to the aperture 38 of the annular top portion 37, and a plurality of conical projections 45, arrayed in plurality such as to surround the projection 44, are formed on an inner surface (internal bottom surface) of the female mold 42. The conical projections 45 are formed in an opposite pattern with respect to the recesses 6 of the lens barrel 31. A mold clamping step is then performed by mating the female mold 42 and the male mold 43.

Next, as shown in FIG. 14B, a base raw material 46 is injected in a molten state between the female mold 42 and the male mold 43 that are in the mold-clamped state. As the base raw material 46, the base raw material described above is used. Also, if the base raw material 46 contains a filler or an additive, the filler is mixed with the base raw material 46 prior to injection into the metal molds. A resin temperature in this process may, for example, be 280°C to 350°C, a filling pressure may, for example, be 50 MPa to 230 MPa, and an injection speed may, for example, be 50 mm/s to 220 mm/s.

Next, the injected base raw material 46 is subject to dwelling and cooling. A dwell pressure in this process may, for example, be 50 MPa to 140 MPa. Also, an injection time that is a sum of a filling time and a dwelling time may, for example, be 1 second to 10 seconds. After cooling, mold opening is performed and the lens barrel 31 having the anti-reflective structure 5 described above is obtained.

Besides the above, various design changes may be applied within the scope of the matters described in the claims .

The present application corresponds to Japanese Patent Application No. 2019-191252 filed in the Japan Patent Office on October 18, 2019 and the entire disclosure of this application is incorporated herein by reference.

### Examples

Although the present invention shall now be described by way of examples, the present invention is not restricted by the examples described below.

### <Examples 1 to 6>

### (1) Manufacture of films

In accordance with the process of FIG. 5, pellets of a carbon-black-blended polycarbonate resin ("Panlite (registered trademark)," manufactured by Teijin Limited) were used to extrusion-mold films and predetermined anti-reflective structure patterns were transferred to obtain films 1 having the anti-reflective structures 5 (film thickness T = 0.3 mm). In regard to each of the anti-reflective structure films 1 obtained, the diameter φ of the virtual circles 7C of the top portion 8, the pitch P of the recesses 6, and the depth D of the recesses 6 of the anti-reflective structure 5 were as shown in Table 1 below.

### (2) Reflectance measurements

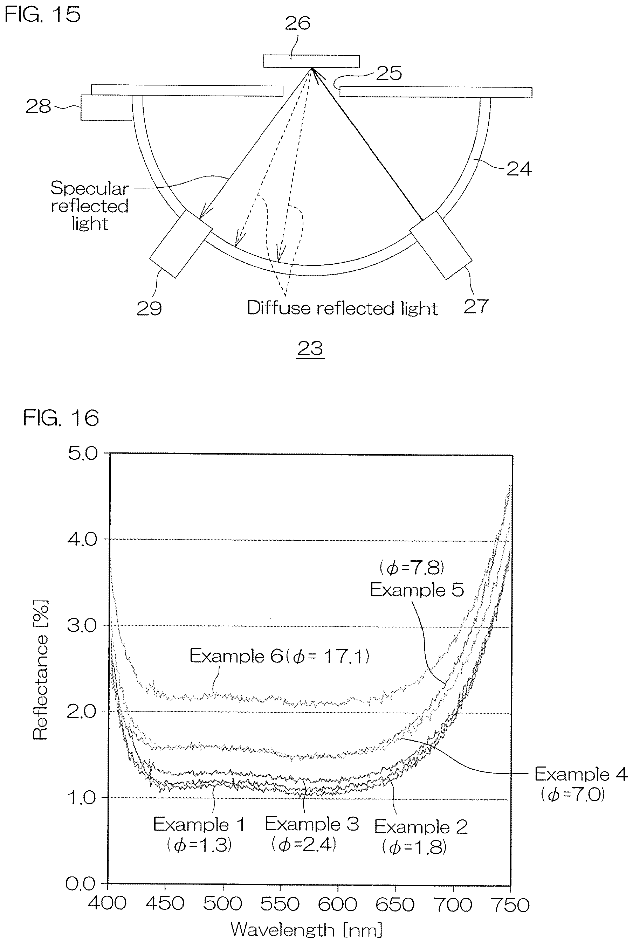

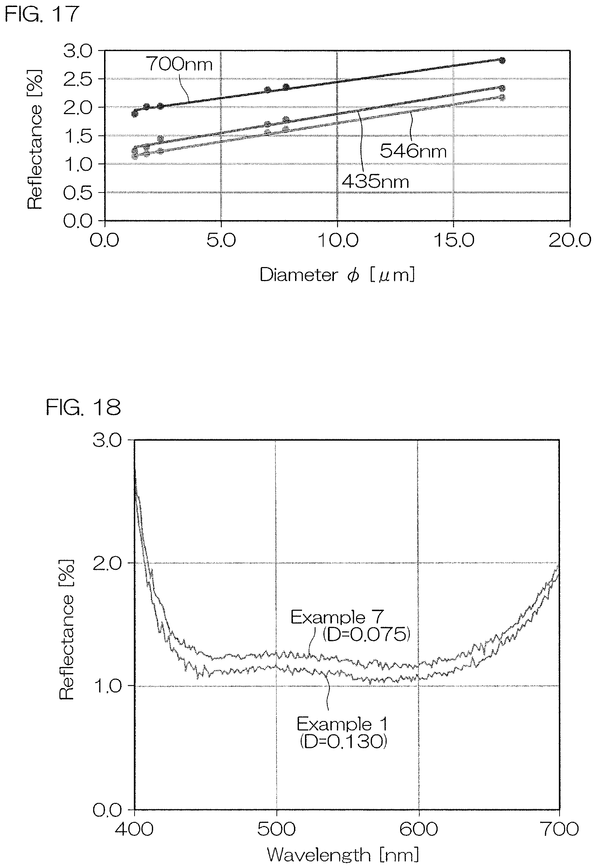

Reflectance measurements were made using a measurement device 23 shown in FIG. 15. Specifically, each of samples 26, obtained from each of Examples 1 to 6, was disposed at a measurement position (slit portion 25) on an integrating hemisphere 24 and was made to reflect light irradiated from a light source 27. The reflected light was scattered by the surrounding integrating hemisphere 24 and by detecting averaged light by a detector 28, total reflectance (specular reflectance + diffuse reflectance) was determined (measurement wavelength range: 200 nm to 800 nm). The diffuse reflectance was measured in a state where a lid 29 at an object position with respect to the light source 27 was removed to eliminate specular reflected light. The results are shown in Table 1 and FIG. 16. Also, for reference, relationships between the diameter φ of the top portion 8 of the respective anti-reflective structures 5 and the reflectance are shown in FIG. 17. Also, reflectances, which, among the measured reflectances, were measured at measurement wavelengths of 435 nm, 546 nm, and 700 nm are shown in Table 1 and FIG. 17 as an example.

### [Table 1]

**Table 1**

| | Specifications of anti-reflective structure | | | Reflectance | | |
|---|---|---|---|---|---|---|
| | Diameter φ | Pitch P of recesses | Depth D of recesses | 435 nm | 546 nm | 700 nm |
| Example 1 | 1.3 µm | 0.100 mm | 0.130 mm | 1.2% | 1.1% | 1.9% |
| Example 2 | 1.8 µm | | | 1.3% | 1.2% | 2.0% |
| Example 3 | 2.4 µm | | | 1.4% | 1.2% | 2.0% |
| Example 4 | 7.0 µm | | | 1.7% | 1.5% | 2.3% |
| Example 5 | 7.8 µm | | | 1.8% | 1.6% | 2.4% |
| Example 6 | 17.1 µm | | | 2.3% | 2.2% | 2.8% |

### (3) Evaluation

From the results in Table 1 and FIG. 16, it could be confirmed that with Examples 1 to 6, a low reflectance of less than 5% can be realized over substantially an entirety of a wavelength range of visible light. Also, from FIG. 17, it could be confirmed that generally, if the diameter φ of the top portion 8 of the anti-reflective structure 5 is not more than 20 um, it is likely that a low reflectance of less than 2.5% can be realized over the substantially the entirety of the wavelength range of visible light.

### <Example 7>

### (1) Manufacture of film

In accordance with the process of FIG. 5, pellets of a carbon-black-blended polycarbonate resin ("Panlite (registered trademark), " manufactured by Teijin Limited) were used to extrusion-mold a film and a predetermined anti-reflective structure pattern was transferred to obtain a film 1 having the anti-reflective structure 5 (film thickness T = 0.3 mm) . In regard to the anti-reflective structure film 1 obtained, the diameter φ of the virtual circles 7C of the top portion 8, the pitch P of the recesses 6, and the depth D of the recesses 6 of the anti-reflective structure 5 were as shown in Table 2 below. The specifications of the anti-reflective structure of Example 1 are also shown in Table 2 for reference.

### (2) Reflectance measurements

Reflectance measurements were made using the measurement device 23 shown in FIG. 15. The measurement method is as has been described above. The results are shown in Table 2 and FIG. 18.

### [Table 2]

**Table 2**

| | Specifications of anti-reflective structure | | | Reflectance | | |
|---|---|---|---|---|---|---|
| | Diameter φ | Pitch P of recesses | Depth D of recesses | 435 nm | 546 nm | 700 nm |
| Example 7 | 1.3 µm | 0.050 mm | 0.075 mm | 1.4% | 1.2% | 2.0% |
| Example 1 | | 0.100 mm | 0.130 mm | 1.2% | 1.1% | 1.9% |

### (3) Evaluation

From the results in Table 2 and FIG. 18, it was found that if the diameter φ of the top portion 8 of the anti-reflective structure 5 is the same, the reflectance increases as the depth D of the recesses 6 becomes shallow. However, it was found that if the diameter φ is not more than 10 um as in Example 7, although the reflectance becomes higher in comparison to Example 1 (depth D = 0.130 mm), a sufficiently excellent anti-reflective function for practical use can be realized. That is, because a sufficient anti-reflective function can be realized even with the depth D of Example 7, both maintenance of strength of the film main body 2 and excellent anti-reflective function can be realized at the same time by making the depth D of the recesses 6 shallow and lessening hollow portions of the film main body 2.

### <Examples 8 to 16>

Next, how the angle θ between the inclined surfaces 11 is related to the reflectance shall be demonstrated by Examples 8 to 16. In Examples 8 to 16, the angle θ and the diameter φ of the top portion 8 of the anti-reflective structure 5 were set as fixed conditions and an evaluation was carried out by changing the depth D of the recesses 6 with respect to the fixed conditions.

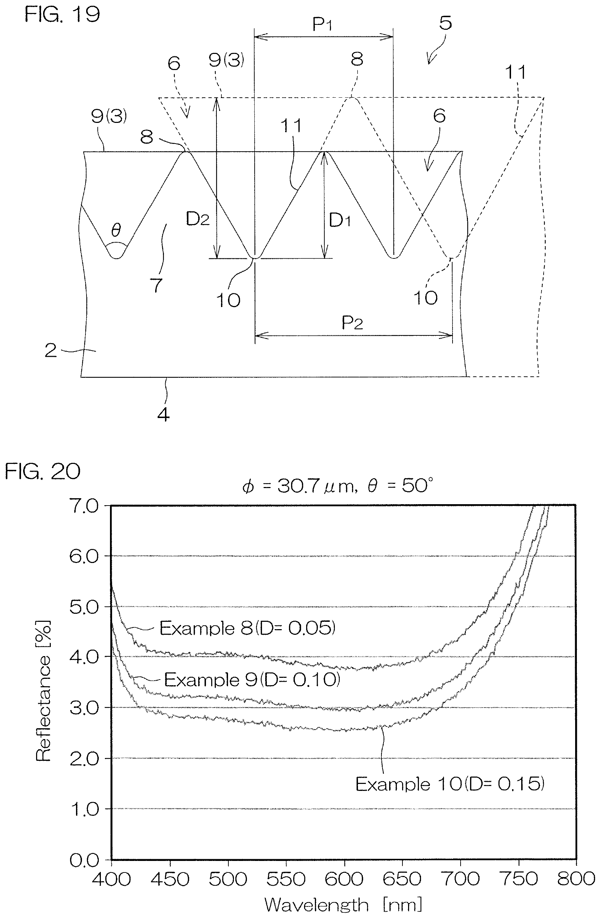

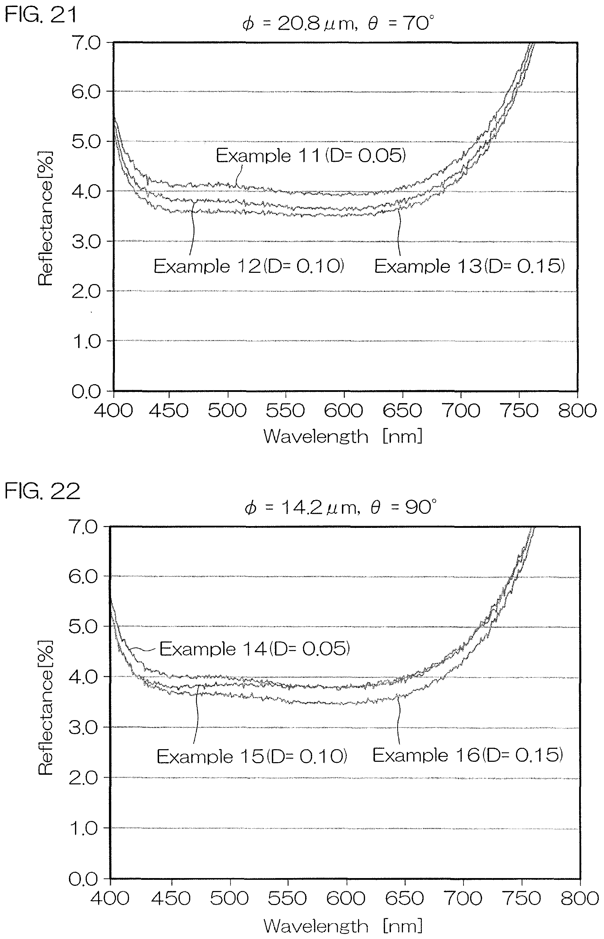

Also, although the following results are evaluation results when the depth D of the recesses 6 is made a variable, the results would be the same even when the pitch P of the recesses 6 is changed. That is, as shown in FIG. 19, if the angle θ between the inclined surfaces 11 is fixed, the pitch P of the recesses 6 increases as the depth D of the recesses 6 is deepened. For example, when a depth D1 of the recesses 6 having the depth D1 and a pitch P1 is changed to a depth D2 as indicated by the broken lines, the pitch P1 also increases to a pitch P2 accordingly. Therefore, although the evaluation results shown in FIG. 20 to FIG. 22 are the evaluation results when the depth D of the recesses 6 is made the variable, the results would be the same even when the pitch P of the recesses 6 is made the variable.

### (1) Manufacture of molded bodies

In accordance with the process of FIG. 14A and FIG. 14B, pellets of a carbon-black-blended polycarbonate resin ("Panlite (registered trademark)," manufactured by Teijin Limited) were used to injection-mold molded bodies. The molded bodies having the anti-reflective structures 5 were thereby obtained.

The molding conditions were set, for example, as follows: resin temperature = approximately 320°C, injection pressure (filling pressure = approximately 210 MPa, dwell pressure = approximately 110 MPa), injection speed = approximately 200 mm/s, injection time (filling time + dwelling time) = approximately 1.6 seconds. In regard to each of the anti-reflective structure molding bodies obtained, the diameter φ of the top portion 8, the angle θ between the inclined surfaces 11, and the depth D of the recesses 6 of the anti-reflective structure 5 were as shown in Table 3.

### (2) Reflectance measurements

Reflectance measurements were made using the measurement device 23 shown in FIG. 15. The measurement method is as has been described above. The results are shown in Table 3 and FIG. 20 to FIG. 22.

### [Table 3]

**Table 3**

| | Specifications of anti-reflective structure | | | Reflectance | | |
|---|---|---|---|---|---|---|
| | Diameter φ | Angle θ of inclined surfaces | Depth D of recesses | 435 nm | 546 nm | 700 nm |
| Example 8 | 30.7 µm | 50° | 0.05 mm | 4.1% | 3.9% | 4.4% |
| Example 9 | | | 0.10 mm | 3.3% | 3.1% | 3.7% |
| Example 10 | | | 0.15 mm | 2.9% | 2.7% | 3.3% |
| Example 11 | 20.8 µm | 70° | 0.05 mm | 4.2% | 4.0% | 4.7% |
| Example 12 | | | 0.10 mm | 4.0% | 3.7% | 4.5% |
| Example 13 | | | 0.15 mm | 3.7% | 3.6% | 4.3% |
| Example 14 | 14.2 µm | 90° | 0.05 mm | 4.2% | 3.9% | 4.5% |
| Example 15 | | | 0.10 mm | 3.9% | 3.8% | 4.6% |
| Example 16 | | | 0.15 mm | 3.8% | 3.6% | 4.3% |

### (3) Evaluation

From the results in Table 3 and FIG. 20 to FIG. 22, it could be confirmed that although Examples 8 to 16 are examples related to molded bodies, a low reflectance of less than 5% can be realized over substantially the entirety of the wavelength range of visible light. Also, the low reflectance could be realized in all of the examples in which the depth D of the recesses 6 were changed with the angle θ and the diameter φ of the top portion 8 of the anti-reflective structure 5 being set as fixed conditions.

Also, from the results in Table 3 and FIG. 20 to FIG. 22, it could be confirmed that if the angle θ between the inclined surfaces 11 is 50° (Examples 8 to 10), a reflectance that is low in comparison to those in the cases of angle θ = 70° and 90° (Examples 11 to 16) could be realized. That is, from the results, it was found that an excellent anti-reflective function can be realized if the angle θ between the inclined surfaces 11 is not more than approximately 60°.

### Reference Signs List

- 1:: anti-reflective structure film
- 2:: film main body
- 3:: first surface
- 4:: second surface
- 5:: anti-reflective structure
- 6:: recess
6C: virtual circle
- 7:: base portion
7C: virtual circle
- 8:: top portion
- 9:: base surface
- 10:: tip portion
- 11:: inclined surface
11A: first inclined surface
11B: second inclined surface
11C: third inclined surface
11D: fourth inclined surface
- 12:: opening portion
- 13:: extruder
- 14:: cooling roll
- 15:: pinch roll
- 16:: transfer pattern
- 17:: projection
- 18:: recess
- 19:: side
19A: first side
19B: second side
19C: third side
19D: fourth side
- 20:: inclined surface
20A: first inclined surface
20B: second inclined surface
20C: third inclined surface
20D: fourth inclined surface
- 21:: apex portion
- 22:: apex portion
- 30:: profile curve
- 31:: lens barrel
- 32:: lens housing portion
- 33:: cylindrical portion
- 34:: first portion
- 35:: second portion
- 36:: step portion
- 37:: annular step portion
- 38:: aperture
- 39:: outer surface
- 40:: inner surface
- 41:: peripheral surface
- 42:: female mold
- 43:: male mold
- 44:: projection
- 45:: conical projection
- 46:: base raw material

## Claims

1. An anti-reflective structural body (1) comprising:
a main body (2) constituted of a raw material that contains a color material of black color, and
an anti-reflective structure (5) formed on an outer surface (3), and
wherein the anti-reflective structure (5) includes a plurality of recesses (6) each being formed to be recessed with respect to the outer surface (3) and a base portion (7) forming boundary portions of the recesses (6) that are mutually adjacent and having a top portion (8) forming a straight ridgeline on the outer surface (3) such that the base portion (7) is exposed outside,
a profile curve (30) of the base portion (7) in a depth direction of the recesses (6) includes the top portion (8) formed to a curved shape which straddles the adjacent recesses (6) through the straight ridgeline as a boundary,
**characterized in that**:
virtual circles respectively including the straight ridgeline of the top portion (8) of the curved shape (7) as circular arcs each have a diameter φ of not more than 50 µm in a depth direction of the each recess (6) from the outer surface (3).

2. The anti-reflective structural body (1) according to Claim 1, wherein the diameter φ of the virtual circles is 1.0 µm to 50 µm.

3. The anti-reflective structural body (1) according to Claim 1 or 2, wherein a pitch of the adjacent recesses is 0.01 mm to 1 mm.

4. The anti-reflective structural body (1) according to any one of Claims 1 to 3, wherein the main body is formed to a layer shape having a first surface that includes the outer surface and a second surface at a side opposite the first surface.

5. The anti-reflective structural body (1) according to Claim 4, wherein a depth D of each of the recesses (6) is of a magnitude not more than 1/2 of a thickness T of the main body (2) of the layer shape.

6. The anti-reflective structural body (1) according to Claim 5, wherein the thickness T of the main body (2) of the layer shape is 0.01 mm to 5 mm and the depth D of each of the recesses (6) is 0.005 mm to 2.5 mm.

7. The anti-reflective structural body (1) according to any one of Claims 1 to 6, wherein each of the recesses (6) has, in a sectional view in a depth direction of the recesses, a pair of inclined surfaces (11) that intersect each other and
an angle θ between the pair of inclined surfaces (11) is not more than 90°.

8. The anti-reflective structural body (1) according to Claim 7, wherein the angle θ between the pair of inclined surfaces (11) is 5° to 90°.

## Patentansprüche

1. Antireflektierender struktureller Körper (1), umfassend:
einen Hauptkörper (2), der aus einem Rohmaterial besteht, das ein Farbmaterial in schwarzer Farbe enthält, und
eine antireflektierende Struktur (5), die an einer Außenoberfläche (3) gebildet ist, und
wobei die antireflektierende Struktur (5) eine Vielzahl von Aussparungen (6) umfasst, von denen jede gebildet ist, um in Bezug auf die Außenoberfläche (3) ausgespart zu sein, und einen Basisabschnitt (7), der Grenzabschnitte der Aussparungen (6) bildet, die aneinander angrenzend sind, und einen oberen Abschnitt (8) aufweisen, der eine gerade Kammlinie an der Außenoberfläche (3) bildet, sodass der Basisabschnitt (7) außen freigelegt ist,
eine Profilkurve (30) des Basisabschnitts (7) in einer Tiefenrichtung der Aussparungen (6) den oberen Abschnitt (8) umfasst, der zu einer gekrümmten Form gebildet ist, die sich über die angrenzenden Aussparungen (6) durch die gerade Kammlinie hindurch als Grenze erstreckt,
**dadurch gekennzeichnet, dass**:
virtuelle Kreise, die jeweils die gerade Kammlinie des oberen Abschnitts (8) der gekrümmten Form (7) als Kreisbögen umfassen, von denen jeder einen Durchmesser ϕ von nicht mehr als 50 µm in einer Tiefenrichtung jeder Aussparung (6) von der Außenoberfläche (3) aufweist.

2. Antireflektierender struktureller Körper (1) nach Anspruch 1, wobei der Durchmesser ϕ der virtuellen Kreise 1,0 µm bis 50 µm beträgt.

3. Antireflektierender struktureller Körper (1) nach Anspruch 1 oder 2, wobei ein Abstand der angrenzenden Aussparungen 0,01 mm bis 1 mm beträgt.

4. Antireflektierender struktureller Körper (1) nach einem der Ansprüche 1 bis 3, wobei der Hauptkörper zu einer Schichtform gebildet ist, die eine erste Oberfläche aufweist, die die Außenoberfläche umfasst, und eine zweite Oberfläche auf einer Seite gegenüber der ersten Oberfläche.

5. Antireflektierender struktureller Körper (1) nach Anspruch 4, wobei eine Tiefe D von jeder der Aussparungen (6) von einer Größe von nicht mehr als 1/2 einer Dicke T des Hauptkörpers (2) in der Schichtform ist.

6. Antireflektierender struktureller Körper (1) nach Anspruch 5, wobei die Dicke T des Hauptkörpers (2) in der Schichtform 0,01 mm bis 5 mm beträgt, und die Tiefe D jeder der Aussparungen (6) 0,005 mm bis 2,5 mm beträgt.

7. Antireflektierender struktureller Körper (1) nach einem der Ansprüche 1 bis 6, wobei jede der Aussparungen (6) in einer Schnittansicht in einer Tiefenrichtung der Aussparungen ein Paar an schrägen Oberflächen (11) aufweist, die einander schneiden, und
ein Winkel θ zwischen dem Paar an schrägen Oberflächen (11) nicht mehr als 90° beträgt.

8. Antireflektierender struktureller Körper (1) nach Anspruch 7, wobei der Winkel θ zwischen dem Paar an schrägen Oberflächen (11) 5° bis 90° beträgt.

## Revendications

1. Corps structurel antireflet (1) comprenant :
un corps principal (2) constitué d'une matière première qui contient une matière colorée de couleur noire, et
une structure antireflet (5) formée sur une surface extérieure (3), et
dans lequel la structure antireflet (5) inclut une pluralité d'évidements (6) chacun étant formé pour être évidé par rapport à la surface extérieure (3) et une partie de base (7) formant des parties de limite des évidements (6) qui sont mutuellement adjacentes et présentant une partie supérieure (8) formant une ligne d'arête droite sur la surface extérieure (3) de sorte que la partie de base (7) est exposée à l'extérieur,
une courbe de profil (30) de la partie de base (7) dans une direction de profondeur des évidements (6) inclut la partie supérieure (8) formée selon une forme incurvée qui chevauche les évidements adjacents (6) par la ligne d'arête droite en tant que limite,
**caractérisé en ce que** :
des cercles virtuels incluant respectivement la ligne d'arête droite de la partie supérieure (8) de la forme incurvée (7) sous forme d'arcs de cercle présentent respectivement un diamètre ϕ non supérieur à 50 µm dans une direction de profondeur de chaque évidement (6) à partir de la surface extérieure (3).

2. Corps structurel antireflet (1) selon la revendication 1, dans lequel le diamètre ϕ des cercles virtuels est compris entre 1,0 µm et 50 µm.

3. Corps structurel antiréfléchissant (1) selon la revendication 1 ou 2, dans lequel un pas des évidements adjacents est compris entre 0,01 mm et 1 mm.

4. Corps structurel antiréfléchissant (1) selon l'une quelconque des revendications 1 à 3, dans lequel le corps principal est formé selon une forme de couche présentant une première surface qui inclut la surface extérieure et une seconde surface sur un côté opposé à la première surface.

5. Corps structurel antiréfléchissant (1) selon la revendication 4, dans lequel une profondeur D de chacun des évidements (6) est d'une grandeur non supérieure à 1/2 d'une épaisseur T du corps principal (2) de la forme de couche.

6. Corps structurel antiréfléchissant (1) selon la revendication 5, dans lequel l'épaisseur T du corps principal (2) de la forme de couche est comprise entre 0,01 mm et 5 mm et la profondeur D de chacun des évidements (6) est comprise entre 0,005 mm et 2,5 mm.

7. Corps structurel antiréfléchissant (1) selon l'une quelconque des revendications 1 à 6, dans lequel chacun des évidements (6) présente, dans une vue en coupe dans une direction de profondeur des évidements, une paire de surfaces inclinées (11) qui se coupent l'une l'autre et
un angle θ entre la paire de surfaces inclinées (11) n'est pas supérieur à 90 °.

8. Corps structurel antireflet (1) selon la revendication 7, dans lequel l'angle θ entre la paire de surfaces inclinées (11) est compris entre 5 ° et 90 °.
